(19) Europäisches Patentamt / European Patent Office / Office européen des brevets

(11) EP 4 202 842 A1

(12) EUROPEAN PATENT APPLICATION

(43) Date of publication:
28.06.2023 Bulletin 2023/26

(51) International Patent Classification (IPC):
*G06T 15/10* (2011.01)

(21) Application number: 21217525.1

(52) Cooperative Patent Classification (CPC):
G06T 15/10

(22) Date of filing: 23.12.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Technische Hochschule
Aschaffenburg
63743 Aschaffenburg (DE)

(72) Inventors:
• Reichert, Hannes
63849 Leidersbach (DE)
• Doll, Konrad
63856 Bessenbach (DE)

(74) Representative: Lucke, Andreas
Boehmert & Boehmert
Anwaltspartnerschaft mbB
Pettenkoferstrasse 22
80336 München (DE)

(54) **AN IMAGE ENCODING METHOD FOR RECORDING PROJECTION INFORMATION OF TWO-DIMENSIONAL PROJECTIONS**

(57) A computer-implemented method for encoding projection properties associated with image data comprises the steps of determining a principal axis of a projection model for obtaining the image data from a scene, determining, for each point in the image data, a deflection metric indicative of an angle between the principal axis and a projection ray through said point, and encoding the deflection metric for each point in the image data as projection data.

determining a principal axis of a projection model for obtaining image data from a scene — S10

determining, for each point in the image data, a deflection metric indicative of an angle between the principal axis and a projection ray through said point — S12

encoding the deflection metric for each point in the image data as projection data — S14

Fig. 4

**Description**

FIELD OF THE INVENTION

The present invention is in the field of image processing. More precisely, the present invention relates to the encoding of projection information associated with image data for automatically classifying objects using machine-learning classifiers.

BACKGROUND

Computer vision aims at classifying objects or their location in a digital representation of a three-dimensional (3D) world, and progress in this field can have practical advantages in several fields of technology, such as robotics and security. For example, accurate object recognition could enable real-time analysis of traffic information in a moving vehicle to assist or even replace a driver in personal automotives.

Most object classification algorithms rely on the analysis of images as two-dimensional (2D) projections of our 3D world by machine learning classifiers, such as neural networks. For example, convolutional neural networks can recognize patterns in the images by way of local operations on a pixel matrix at different scales to ultimately detect the presence of certain objects in the 2D projection.

A projective imaging apparatus, such as a camera, automatically obtains two-dimensional projections of three-dimensional scenes, which are suitable for object classification. When 3D information of a scene is known, e.g. via a distance measuring device, such as a light detection and ranging (LiDAR) system, the information can be reduced to a two-dimensional pixel array through a projective transformation, in particular into a spherical or cylindrical coordinate system. A convolutional neural network can then similarly analyze this projected image of the 3D information. However, the resulting two-dimensional projection is in either case associated with a loss of 3D information, and a convolutional neural network generally has no information on the location of a given pixel in relation to the camera during computation because of translation equivariance.

For many tasks, it would however be advantageous to supply a measure of the three-dimensional position of the object in the image to the machine learning classifier, e.g. to improve a classification of the inferences from the presence of the object in a particular location.

Facil et al ("CAM-Convs: Camera-Aware Multi-Scale Convolutions for Single-View Depth", arXiv:1904.02028) teaches camera-aware multi-scale convolutions for depth estimation from image data supplied to a neural network. The method comprises pre-computing pixel-wise coordinates as well as horizontal and vertical field-of-view maps, which are fed along with input features to a convolution operation. These maps are supplied to the neural network with different resolutions and on different layers for allowing the network to learn and predict depth patterns that depend on the camera calibration. The authors conclude that the neural network supplied with the respective maps can generalize over camera intrinsics and can allow depth prediction networks to be camera-independent.

SUMMARY OF THE INVENTION

The known methods which try to provide a machine classifier with 3D information alongside 2D projections are however reliant on multiple data channels, such as "x-, y-, and z-coordinates" associated with a pixel's origin or "pitch" and "yaw" information associated with a camera. These additional data channels can increase computational load and reduce convergence during training.

In view of this state-of-the-art, the object of the invention is to provide an improved method for data preparation to improve object classification with a machine-learning classifier from images of a three-dimensional scene.

This object is solved by a method, a computer program and a system according to the independent claims. The dependent claims relate to preferred embodiments.

According to a first aspect, the invention relates to a computer-implemented method for encoding projection properties associated with image data. The method comprises the steps of determining a principal axis of a projection model for obtaining the image data from a scene, and determining, for each point in the image data, a deflection metric indicative of an angle between the principal axis and a projection ray through said point. The method further comprises encoding the deflection metric for each point in the image data as projection data.

As a result of the definition of the deflection metric as indicative of an angle between the principal axis associated with the projection and the virtual projection light ray through the point's origin in the scene and a virtual camera position, the image data may contain information on an angular distance between the origin of the point from the center of the field of view. The angle can act as location information of the imaged object in image data, which can enable the use of the encoded image data with the deflection metric for training a machine-learning classifier, which may then be generalized for different imaging apparatuses. The deflection metric is encoded for each point in the image data, and the projection data can therefore be supplied in the same structure as the image data to a machine learning classifier.

As opposed to conventional measures of "*pitch*" or "*yaw*", encoding horizontal or vertical field of view measures, the deflection metric may contain information on the position of the point in a spherical coordinate system centered on the respective imaging apparatus, with the principal axis aligned along the zenith or pole of the coordinate system.

In preferred embodiments, the angle and/or the deflection metric is mathematically equivalent or proportional to the zenith angle of a spherical coordinate system, wherein the zenith is aligned with the principal axis of the projection model.

The deflection metric may then be indicative of the zenith angle or inclination between the zenith direction (e.g. "z"-axis) and the light ray of the point's origin in the scene.

As image data of a two-dimensional projection is generally provided as a regularly distributed array of points (e.g. pixels), local gradient operations on the deflection metric of neighboring points can be used to estimate the local gradient of the deflection metric, which can be used as an estimation of the azimuth angle. The azimuth angle is generally defined as the angle between a reference direction (e.g. the x- or y-direction) and a projection of the projection ray onto a plane normal to the zenith direction (e.g. the x-y-plane), which will usually be parallel to the image plane in this projection.

Accordingly, the deflection metric may encode a measure on an opening angle associated with a given point, and the local gradient of this deflection metric may be used to estimate in which direction from the principal axis said point is spaced. In other words, the properties of the projection may be encoded in a way that the origin of the point in the image plane can be decoded with local convolutional operations on the deflection metric of neighboring points in image data with the addition of only a single data channel.

Local gradient operations may be implemented by a machine learning classifier, such as a convolutional neural network, based on convolutional operations on the deflection values of neighboring data points (e.g. pixels). For example, a neural network may learn corresponding filters as hyperparameters through backpropagation during a training process. Thus, the (neural) machine-learning network may decode the azimuth angle without requiring an additional data channel at an appropriate position during the internal calculation. In particular, the neural network may not require access to the pixel coordinates, but may determine equivalent information from the deflection metric.

With a single data channel, the deflection metric may therefore encode a relative position of the object with respect to the principal axis of the projection, thereby providing access to the position of a pixel in a scene with minimal data complexity and in a format, which can be generalized between image data obtained with different imaging systems.

In embodiments, where the distance from the camera to the point's origin is known or can be estimated form the image data, the 3D point cloud associated with the image data can in principle be reconstructed from the deflection metric, the azimuth angle derived therefrom, and the distance. Hence, the method advantageously encodes information about the origin of a point with image data for the use by a machine learning classifier for object classification from a 3D scene, while limiting the number of additional data channels.

The method is based on the generally applicable assumption that a projection model from a point in 3D space, i.e. the scene, to an image representation is given or can be inferred from information associated with the image data. The projection model may provide a mapping between a pixel position in the image data and a parametrization of a virtual light ray in three-dimensional space, wherein the virtual light ray corresponds to a direction between the camera and the pixel origin in the scene.

In preferred embodiments, the projection model is based on a cylindrical or spherical projection and in particular based on a pinhole camera model.

For example, for a camera the projection can be modelled by a pinhole camera model and can be parameterized by linear and/or nonlinear camera intrinsics, such as focal length, pixel magnification, skew, and principal point shift, or lens distortions. These camera intrinsics can be calculated based on the constituents of the imaging system, e.g. the position and properties of lenses and apertures along the optical path, can be measured in an optical setup or can be estimated by calibration. However, a rough estimate for the projection model can also be approximated based on metadata saved with the image data, such as field of view, angle of view in different sensor directions, focal length, database information associated with a camera identifier or a camera lens identifier, a combination thereof, or the like. Such information may be natively recorded in image data, e.g. as part of the image file format, and may therefore generally be considered available.

As another example, for a LiDAR as an imaging apparatus, a projection on image data can be calculated and modelled by a spherical projection of the three-dimensional point cloud onto a two-dimensional virtual image and parameterized by linear intrinsics, such as the number of layers, the angular resolution, or equivalent parameters.

The principal axis associated with the projection model generally corresponds to the optical axis of the imaging apparatus, i.e. an imaginary line that defines the path along which light propagates through the system, up to a first approximation, and along which there is usually some degree of rotational symmetry. In a camera, composed of simple lenses and mirrors, the principal axis passes through the center of curvature of each surface, and coincides with the axis of rotational symmetry.

For a two-dimensional projection of three-dimensional data obtained by a distance measuring apparatus, such as a LiDAR, which can provide three-dimensional point data of objects on all sides of the apparatus, the principal axis may in principle be freely selected. However, even in these cases, the principal axis should be determined according to a contextually meaningful direction for enabling inferences from the distance measure, such as a principal axis aligned with a movement direction of a car or robot mounting the distance measuring apparatus, or a center of the image data.

In preferred embodiments, the principal axis goes through a center of a field of view of an imaging apparatus for recording the scene.

By centering the principal axis in the field of view, the deflection metric can be comparable between different imagining apparatuses, as the optical axis generally substantially coincides with a normal through the center of the field of view in cameras. For distance measuring apparatuses, the principal axis may correspond to a normal on the center of the image formed by the image data projected from the 3D point data, to define a comparable angular reference through the projection data with respect to camera images.

The deflection metric can encode an angle of view between the principal axis and a virtual ray of light originating from a point's origin, such that for a given value of the deflection metric, an opening angle around the principal axis may be defined. Accordingly, same values of the deflection metric may be arranged on a circle around the principal axis on a projected image plane, which may lead to the same values of the deflection metric being arranged on a circle or ellipse in image data. For example, depending on skew of the sensor, lens distortions, or the like, the circle in a projected image plane maybe mapped onto an ellipse overlapping the sensor matrix in a camera.

In preferred embodiments, equipotential lines of the deflection metric encoded for each point in the image data approximate elliptic arcs around the principal axis in an image of the scene.

The circular arcs may result from an obliqueness of the principal axis with respect to the image plane. Preferably, the principal axis is preferably substantially perpendicular to the image plane or to the projected image plane of the projection model, such as a homogeneous coordinate representation of a projected point in a pinhole camera model. For example, an angle between a normal of the image plane and the principal axis may be smaller than 45°, preferably smaller than 30°, most preferably smaller than 10°.

The curvature of the circle or ellipse of the same values of the deflection metric may point towards the principal axis in the image of the scene, and based on its direction, the azimuth angle associated with the respective points in the image may be determined. The local curvature may be determined based on a local gradient of the deflection metric.

In preferred embodiments, the method further comprises, determining a local gradient of the deflection metric at a certain point in the image data based on the values of the deflection metric in neighboring points in the image data for reconstructing a position of the certain point in the scene.

In preferred embodiments, the local gradient of the deflection metric at a given point is substantially aligned along a line through the principal point associated with the projection model, wherein a structure of the projection data reflects a structure of the image data, such that a local operation on the deflection metric of neighboring points estimates the local gradient, in particular using an image gradient operator on the deflection metrics of the given point and its direct neighbors in image data, wherein the image gradient operator is preferably a discrete differentiation operator for computing an approximation of the gradient of the deflection metric in the points of the image data, most preferably a Prewitt operator, a Sobel operator, a Scharr operator, or a Kayyali operator.

The aforementioned operators may comprise two convolutional filters, which may act on the deflection metric of a local ensemble of points, such as a $3\times3$ or $5\times5$ matrix of neighboring points, for determining the two components of the local gradient in an image coordinate system. Based on the components of the local gradient, the direction of a target point in image data from the principal point in the image may be inferred. The Scharr operator or the Kayyali operator may be considered as extensions or higher orders of the Prewitt or Sobel operator and can be obtained based on an optimization of the respective filter values, e.g. with respect to numeric precision.

In preferred embodiments, the method further comprises recording a distance between the camera and the projected object for each point in the image data.

Based on the deflection metric and the distance recorded with the image data, a 3D point cloud of the scene captured in the image data may be reconstructed.

The projection data and the image data may be provided to an analysis system as an analysis set, e.g. as a single file with multiple data channels or as separate data files.

In preferred embodiments, the method further comprises providing the image data alongside the deflection metric to a machine learning classifier for classifying objects in an image of the scene based on the image data.

The deflection metric may be provided to a machine learning classifier, such as a convolutional neural network, as a data value associated with the pixels of a pixel matrix, such as alongside an intensity or color value. The deflection metric may enable access by the machine learning classifier to the point's origin in an image of the scene through convolutional operations on the deflection metric of neighboring points.

In preferred embodiments, the method further comprises receiving image data for the scene and projection information of an imaging system for recording the image data, in particular comprising a focal length, a pixel magnification, a skew, a principal point shift, a sensor dimension, an angular resolution, or a parametrization of lens distortions, of the imaging system, or a combination thereof, and determining the deflection metric for each point in the image data based on the projection information of the imaging system.

The deflection metric may be preconfigured in the imaging system, such as a camera, and may be encoded with the image data. However, the deflection metric may equally be calculated based on the projection information by a processing system internal or external to the imaging system.

In preferred embodiments, the method further comprises receiving three-dimensional point data of the scene, and calculating a projection of the three-dimensional point data on a two-dimensional image for obtaining two-dimensional image data for the scene.

In other words, the method may be equally applied to three-dimensional point data, e.g. as obtained by a radar or LiDAR system. Preferably, the projection results in the equivalent of an image taken by a camera, such that the image data is comparable between camera images and the aforementioned distance measuring systems. For example, the projection may project the three-dimensional point data of the scene onto a two-dimensional image, wherein the projection properties associated with the two-dimensional image are equivalent to a camera projection model.

The method may be implemented on a processing system. The processing system may comprise a single processing unit or may comprise a plurality of processing units, which may be functionally connected. The processing units may comprise a microcontroller, an ASIC, a PLA (CPLA), an FPGA, or another processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like. For example, the processing system may be connected to an imaging system, such as a camera, and a digital storage through a data interface for receiving the image data and projection information for the imaging apparatus. In some embodiments, the processing system comprises or communicates with a graphics processing unit and/or a neural processing unit and/or a deep learning processing unit, such as for implementing the machine learning classifier or performing other numerical calculations as part of the method.

In some embodiments, a processing system receives the projection information comprising configuration information of the imaging system and retrieves an associated map of the deflection metric for the configuration information, which may have been previously generated, for determining the principal axis and determining the respective deflection metric values. In other words, in some embodiments, a pixel-wise mapping of the deflection metric is pre-generated and, in the method, the steps of determining the principal axis and determining the deflection metric are combined by retrieving the appropriate pixel-wise mapping of the deflection metric for the projection information. The pixel-wise mapping of the deflection metric may then be supplied alongside the image data to a machine learning classifier as an analysis set.

According to a second aspect, the invention relates to a non-transitory medium comprising machine-readable instruction, which, when executed by a processing system, implement a method according to any one of the preceding embodiments of the method according to the first aspect.

According to a third aspect, the invention relates to an image data encoding system comprising a processing system. The processing system is configured to receive image data of a scene, to determine a principal axis of a projection model for projecting the scene onto a two-dimensional grid of pixels, to determine, for each pixel projected from the scene, a deflection metric indicative of an angle between the principal axis and a projection ray through said pixel, and to encode the deflection metric for each pixel as projection data.

In preferred embodiments, the angle and/or the deflection metric is mathematically equivalent or proportional to the zenith angle of a spherical coordinate system, wherein the zenith is aligned with the principal axis of the projection model.

In preferred embodiments, the principal axis goes through a center of a field of view of an imaging system for recording the scene.

In preferred embodiments, the system further comprises an imaging system for obtaining the image data of the scene via a measurement, in particular comprising a camera and/or a distance measuring device, and the processing system is configured to receive the image data from the imaging system.

The processing system maybe configured to provide the projection data alongside the image data to an analysis system, such as a machine learning classifier.

In preferred embodiments, the processing system is further configured to provide the image data alongside the deflection metric to a machine learning classifier for classifying objects in an image of the scene based on the image data.

In preferred embodiments, the processing system is further configured to receive image data for the scene and projection information of an imaging system for recording the image data, in particular comprising a focal length, a pixel magnification, a skew, a principal point shift, a sensor dimension, an angular resolution, or a parametrization of lens distortions, of the imaging system, or a combination thereof; and to determine the deflection metric for each point in the image data based on the projection information of the imaging system.

In preferred embodiments, the processing system is further configured to receive three-dimensional point data of the scene; and to calculate a projection of the three-dimensional point data on a two-dimensional image for obtaining two-dimensional image data for the scene.

According to a fourth aspect, the invention relates to a data structure comprising image data and projection data. The image data comprises a plurality of image values arranged in a regular array, the regular array of image values forming a two-dimensional image. The projection data comprises a plurality of deflection metric values arranged in a regular array reflecting the structure of the regular array of image values. The deflection metric values are each indicative of an angle between a principal axis of a projection model for obtaining the image data from a scene and a projection ray corresponding to the image value in the image data at the same position as the deflection metric.

According to a fifth aspect, the invention relates to an image classifying system comprising a machine learning classifier, wherein the machine learning classifier is trained with image data based on a two-dimensional grid of pixels, wherein each pixel is associated with a deflection metric indicative of an angle between a principal axis of a projection model for projecting the scene onto the two-dimensional grid of pixels and a projection ray through said pixel, and wherein the deflection metric is provided to the machine learning classifier alongside the image data as an input.

DETAILED DESCRIPTION OF EMBODIMENTS

The features and numerous advantages of the method and system according to the present invention will best be understood from a detailed description of preferred embodiments with reference to the accompanying drawings, in which:

Fig. 1        schematically illustrates an example of a projection of a point in a three-dimensional scene onto an image plane according to a pinhole camera model;

Fig. 2A-C     schematically illustrate examples of different representations of point locations in a spherical projection;

Fig. 3        illustrates an example of a spherical coordinate representation of a point in a view of an image plane using the projection of Fig. 2C;

Fig. 4        illustrates an example of a computer-implemented method for encoding projection properties associated with image data;

Fig. 5        illustrates a schematic example of an encoding system for implementing the method illustrated in the example of Fig. 4;

Fig. 6        illustrates a schematic example of an analysis data set, in which an image of a scene is overlaid with an illustration of the corresponding deflection metric; and

Fig. 7        illustrates an example of a classification system.

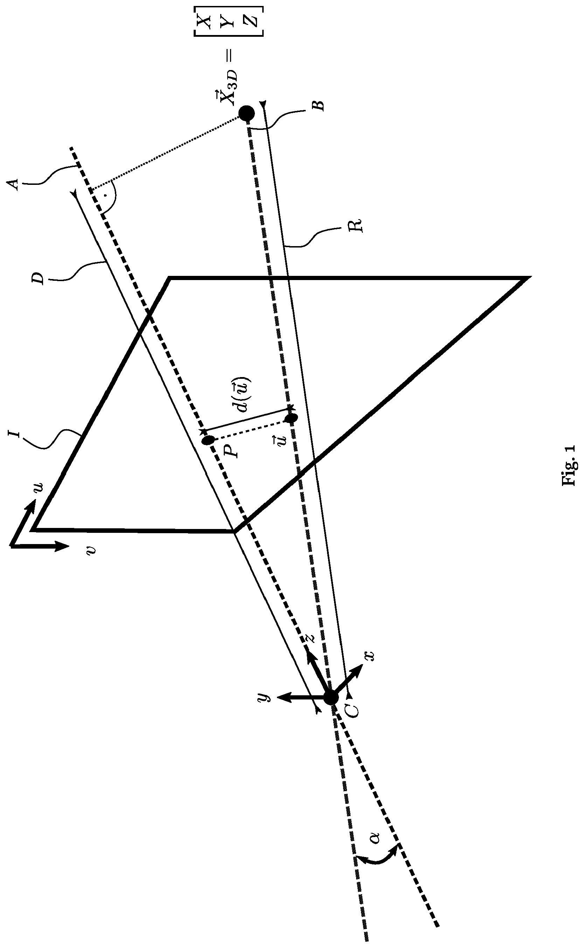

Fig. 1 schematically illustrates an example of a projection of a point $\vec{X}_{3D}$ in a three-dimensional scene onto a virtual image plane I according to a pinhole camera model. In the illustration, a virtual camera position C (e.g. the camera aperture position) coincides with the origin of a Cartesian coordinate system defined by x-, y-, and z-axes. The pinhole camera model is defined by a principal axis A, which is represented by a dashed line through the camera position C and oriented along the z-axis of the coordinate system. A principal point P is defined as the intersection between the image plane I and the principal axis A.

The point $\vec{X}_{3D}$ is projected onto the projected point $\vec{u}$ in the image plane I along a projection ray B, the projected point $\vec{u}$ having pixel coordinates u, v. The projection ray B and the principal axis A define an angle $\alpha$ between each other. The distance between the camera position C and the point $\vec{X}_{3D}$ may be defined as the shortest distance

$$R = \sqrt{X^2 + Y^2 + Z^2}$$ (with the camera position C located at the origin of the coordinate system), or may be defined as the projected distance D, i.e. the scalar product between the vector representation and a normalized vector associated with the principal axis A, which in the illustrated example simplifies to "Z".

The 3D point $\vec{X}_{3D}$ can be projected onto two-dimensional projected coordinates $\vec{x}$ by means of a transformation towards homogeneous coordinates:

$$\begin{bmatrix} x \\ y \\ 1 \end{bmatrix} = \frac{1}{Z}\vec{X}_{3D}, \qquad (1)$$

such that all points $\vec{X}_{3D}$ of a scene can be projected onto a projected plane with normalized distance from the origin of the coordinate system, i.e. the virtual camera position $C$. Pixel coordinates $u, v$ of the projected point $\vec{u}$ can be determined from projected coordinates $\vec{x}$ by applying the intrinsic matrix $\mathbb{K}$ associated with the camera/projection model, and vice versa:

$$\underbrace{\begin{bmatrix} u \\ v \\ 1 \end{bmatrix}}_{\vec{u}} = \underbrace{\begin{bmatrix} k_{11} & k_{12} & k_{13} \\ 0 & k_{22} & k_{23} \\ 0 & 0 & 1 \end{bmatrix}}_{\mathbb{K}} \cdot \underbrace{\begin{bmatrix} x \\ y \\ 1 \end{bmatrix}}_{\vec{x}} \qquad (2)$$

The intrinsic matrix K, sometimes also referred to as "camera matrix", provides a mapping between 3D coordinates of points in a scene (3D space) to 2D image coordinates, e.g. on a pixel camera sensor, and can encode the projection properties of an imaging system. The intrinsic matrix $\mathbb{K}$ can be obtained via calibration, measurement of imaging parameters, modelling of the imaging system, calculation from camera/projection properties, or a combination thereof, e.g. in a calibration process which may also be called camera resectioning or (geometric) camera calibration. For image data projected from 3D point data, the intrinsic matrix K may be directly calculated based on the projection properties.

Starting from a representation of the point $\vec{u}$ in pixel (image) coordinates $u, v$, the distance $d(\vec{u})$ in homogeneous coordinates of the projected plane may therefore be calculated using the inverse of the intrinsic matrix $\mathbb{K}^{-1}$ according to:

$$d(\vec{u}) = \sqrt{[\mathbb{K}^{-1}\vec{u}]^T[\mathbb{K}^{-1}\vec{u}] - 1} \qquad (3)$$

The distance $d(\vec{u})$ is a normed distance in homogeneous coordinates, i.e. the distance between the camera position $C$ and the principal point $P$ is one. Accordingly, the angle $\alpha$ between the principal axis $A$ and the projection ray $B$ can be calculated according to:

$$\alpha(\vec{u}) = \arctan(d(\vec{u})) \qquad (4)$$

The angle $\alpha$ may describe an opening angle associated with a pixel of a camera in relation to the principal axis $A$. The angle $\alpha$ may correspond to a zenith angle (inclination) of a spherical coordinate representation of the point $\vec{X}_{3D}$, wherein the zenith axis is aligned along the principal axis $A$ of an imaging system, such as a camera.

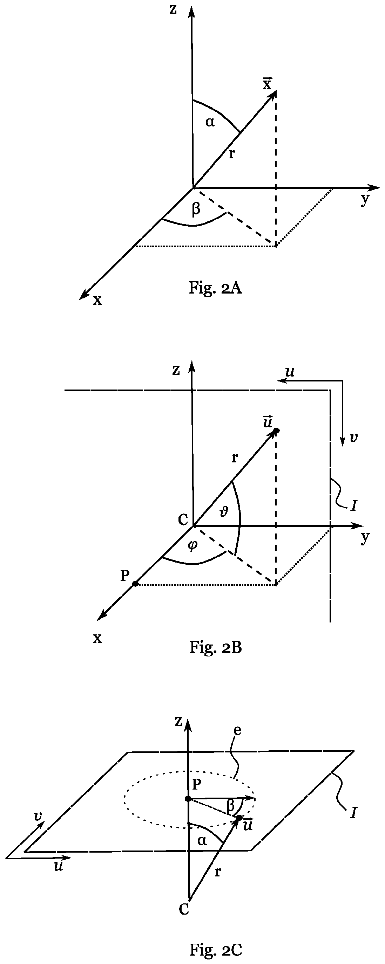

Fig. 2A illustrates an example of a spherical coordinate representation of a three-dimensional vector $\vec{x}$ in the context of a Cartesian coordinate system with axes $x, y, z$. The illustrated spherical coordinate system is defined by a zenith axis, aligned with the z-axis of the Cartesian coordinate system, as well as a reference direction (sometimes called azimuth reference), perpendicular to the zenith axis and corresponding to the x-direction in the illustrated example. The vector $\vec{x}$ may then be described by the zenith angle $\alpha$ between the vector $\vec{x}$ and the zenith direction, the azimuth angle $\beta$ between the projection of the vector $\vec{x}$ onto the x-y-plane and the x-axis, and the radial distance $r = \sqrt{x^2 + y^2 + z^2}$ , with $x, y$, and z being the respective values of the x-, y-, z-coordinates of the vector $\vec{x}$.

Conventionally, as shown in the example of Fig. 2B, when describing the origin of a point $\vec{u}$ of a two-dimensional projection of a scene on an image plane $I$ with spherical coordinates, the principal axis A of the projection is aligned with the reference direction (i.e. the x-axis), and the pixel coordinate system (indicated by arrows "$u, v$") is perpendicular to the reference direction and parallel to the zenith direction (i.e. parallel to the y-z plane). For example, the origin of a point $\vec{u}$ in image coordinates may be described by an associated pair of a "pitch angle", e.g. $\vartheta = 90° - \alpha$, and a "yaw angle", e.g. $\varphi = \beta$, in spherical coordinates. The "pitch angle" $\vartheta$ and the "yaw angle" $\varphi$ may provide measures of an associated horizontal field of view (opening angle) and an associated vertical field of view (opening angle), respectively, from a camera position $C$ for that point. Lines of constant "pitch angle" $\vartheta$ and lines of constant "yaw angle" $\varphi$ are straight lines in the image plane $I$, aligned along the z- ($v$-) and the y- ($u$-) direction, respectively.

Fig. 2C illustrates an example, where the principal axis *A* is instead aligned with the zenith direction ("z"), such that the pixel coordinate system (indicated by arrows "u, $\upsilon$") associated with the image plane *I* is parallel to the x-y- plane (not shown in Fig. 2C) and therefore parallel to the reference direction (parallel to "*u*"). In this illustrated case, the origin of each projected point $\vec{u}$ in the field of view may be described by the zenith angle $\alpha$ and the azimuth angle $\beta$.

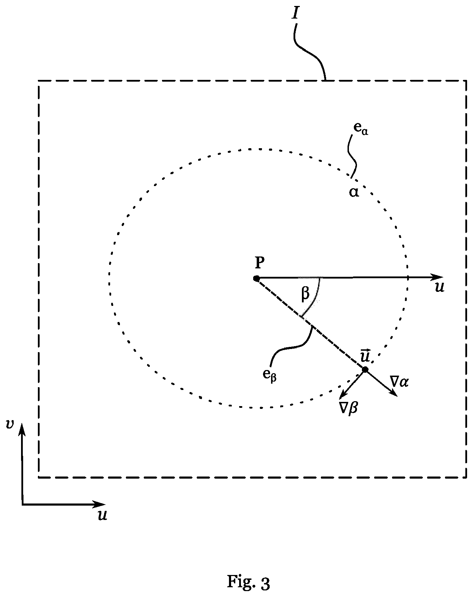

As opposed to the previous example, lines of constant zenith angle $\alpha$ are not straight, but form curved equipotential lines "e" in the image plane *I* around the principal point *P*, which may be elliptic or circular depending on the projection properties. Lines of constant azimuth angle $\beta$ are straight lines in the image plane *I*, but may fan out circumferentially from the principal point *P*, wherein each value of the azimuth angle $\beta$ is associated with an equipotential line (not shown in fig. 2C, but shown in Fig. 3) oriented differently in the image plane *I*.

As a result of the curvature of the equipotential lines "e" associated with a given value of the zenith angle $\alpha$, the equipotential lines "e" may in general be oblique to a regular grid of a pixel matrix in which image data is usually captured and/or stored. Moreover, and contrary to the example in Fig. 2B, the local directions of the respective equipotential lines "e" in a regular (e.g. rectangular) pixel grid may in general be different at different points $\vec{u}$.

Notably, due to the definition of the coordinate system, at a given point $\vec{u}$ the equipotential lines of the zenith angle $\alpha$ and the azimuth angle $\beta$ may be substantially perpendicular to each other. Moreover, at a local approximation, the gradient $\nabla\alpha$ of the zenith angle $\alpha$ and the gradient $\nabla\beta$ of the azimuth angle $\beta$ may be substantially perpendicular to their respective equipotential lines. Hence, in principle by determining the local gradient $\nabla\alpha$, $\nabla\beta$ of one of the angles $\alpha$, $\beta$, the local direction of the equipotential lines e of the respective other angle $\beta$, $\alpha$ may be determined.

Fig. 3 illustrates an example of a spherical coordinate representation of a point $\vec{u}$ in an image plane *I* using the projection of Fig. 2C, with the principal point *P* representing the intersection of the image plane *I* with the principal axis *A*. The point $\vec{u}$ lies on an equipotential line $e_\alpha$ associated with a given value of the zenith angle $\alpha$, and is further associated with an azimuth angle $\beta$ (associated with equipotential line $e_\beta$). Vector arrows $\nabla\alpha$, $\nabla\beta$ illustrate the local gradient of the zenith angle $\alpha$ and the azimuth angle $\beta$, respectively, at the point $\vec{u}$.

As can be seen from the figure, the local gradient $\nabla\alpha$, $\nabla\beta$ of the zenith angle $\alpha$ and the azimuth angle $\beta$ will locally be aligned substantially along the equipotential lines $e_\beta$, $e_\alpha$ of the azimuth angle $\beta$ and the zenith angle $\alpha$, respectively. Specifically, the local gradient $\nabla\alpha$ of the zenith angle $\alpha$ is substantially oriented along the vector $\vec{u}$, i.e. it points radially outward from the principal point P, substantially aligned with an equipotential line $e_\beta$ of the azimuth angle $\beta$.

As each equipotential line $e_\beta$ of the azimuth angle $\beta$ has a characteristic direction, by locally estimating the gradient $\nabla\alpha$ of the zenith angle $\alpha$, a local estimation of the azimuth angle $\beta$ can be inferred.

The direction of the local gradient $\nabla\alpha$ can be inferred from a convolutional operation on the values of the zenith angle $\alpha$ on a local portion of the pixel grid, e.g. by applying a Sobel operator on a matrix of the values of the zenith angle $\alpha$ at neighboring pixels. Specifically, with the Sobel filter

$$S_x = \begin{bmatrix} 1 & 0 & -1 \\ 2 & 0 & -2 \\ 1 & 0 & -1 \end{bmatrix} \tag{5}$$

the partial derivatives $\dfrac{\delta\alpha}{\delta u}$, $\dfrac{\delta\alpha}{\delta v}$ of the zenith angle $\alpha$ with respect to the grid axes *u*, $\upsilon$ of the pixel grid may be determined by computing the convolution (*)

$$\frac{\delta\alpha}{\delta u} = \alpha * S_x \tag{6}$$

$$\frac{\delta\alpha}{\delta v} = \alpha * S_x^T \tag{7}$$

$$\nabla\alpha = \begin{pmatrix} \frac{\delta\alpha}{\delta u} \\ \frac{\delta\alpha}{\delta v} \end{pmatrix}$$

in order to determine an approximation of the local gradient $\qquad$.

Since the local gradient $\nabla\alpha$ is aligned substantially along the vector pointing at point $\vec{u}$ from the principal point *P*, and the zenith angle $\alpha$ provides a distance measure from the principal point *P*, the location of the point $\vec{u}$ in the image plane $I$ may therefore be estimated based on the knowledge of the values of the zenith angle $\alpha$ in a regular grid alone. Further, based on the direction of the vector, the azimuth angle $\beta$ may also be calculated, e.g. to reconstruct a location of the point $\vec{u}$ in the field of view of a camera in spherical coordinates.

In other words, although the zenith angle $\alpha$ in principle only represents one of the two angles $\alpha$, $\beta$ generally required to describe a point $\vec{u}$ in spherical coordinates, local convolutional operations can be used to estimate the azimuth angle $\beta$ when the zenith angle $\alpha$ is available for a regular grid of pixels, in principle as long as the zenith direction is oblique to the image plane $I$.

Hence, when the principal axis $A$ is aligned along the zenith direction ("z"), the zenith angle $\alpha$ of a spherical coordinate system can be used to encode positional information in a pixel matrix used for recording image data with a single data channel. The zenith angle $\alpha$ inherently provides projection information as an angular reference to the principal axis $A$, indicating an opening angle associated with a respective pixel of a pixel matrix. The zenith angle $\alpha$ further provides a normalized distance measure, which can be used to generalize the processing of image data obtained between different imaging systems.

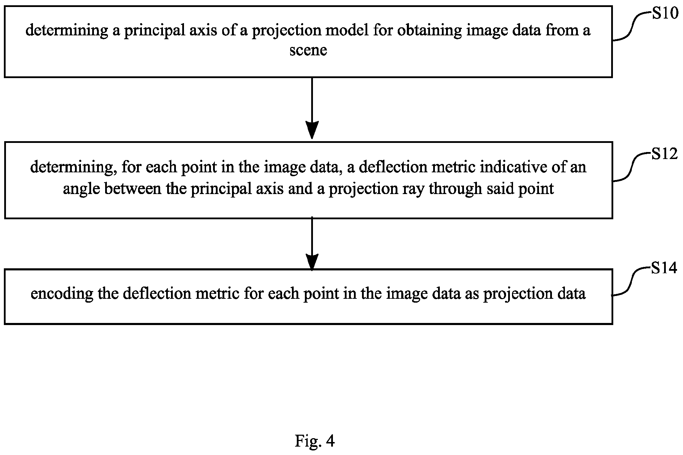

Fig. 4 illustrates an example of a computer-implemented method for encoding projection properties associated with image data. The method comprises determining a principal axis A of a projection model for obtaining image data from a scene (S10), and determining, for each point $\vec{u}$ in the image data, a deflection metric indicative of an angle $\alpha$ between the principal axis $A$ and a projection ray through said point (S12). The method then comprises encoding the deflection metric for each point $\vec{u}$ in the image data as projection data (S14).

The deflection metric may be selected as the zenith angle $\alpha$ or another distance measure indicative of the zenith angle $\alpha$, such as a distance $d(\vec{u})$ between the respective point and the principal point $P$ in the image plane $I$, when the distance between the origin of the coordinate system (e.g. the virtual camera position $C$) and the projected plane is a normalized value. For example, $d(\vec{u})$ may be provided in homogeneous coordinates (i.e. normalized value equal to "one").

The deflection metric may be calculated with respect to the principal axis A, which advantageously corresponds to an optical axis of an imaging system for recording the image data. The deflection metric may then be recorded as an array of deflection metric values in projection data. The array may reflect the shape of an array of data values in image data, such that each point in image data can be associated with a corresponding value of the deflection metric in projection data. The projection data can be encoded as an additional data channel with the image data, or can be encoded in a separate format, e.g. in a separate file, for providing the projection data to a processing unit, such as a machine learning classifier.

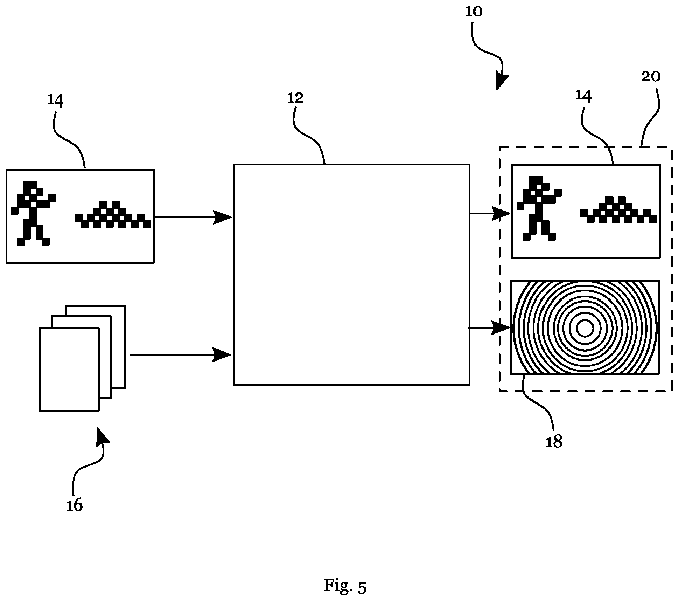

Fig. 5 illustrates a schematic example of an encoding system 10 for implementing the method illustrated in the example of Fig. 4. The system 10 comprises a processing system 12 for receiving image data 14 and projection information 16. The processing system 12 may comprise an ASIC or a microcontroller, which may receive the image data 14 from an imaging system, e.g. a camera (not shown). The imaging system maybe associated with the processing system 12 in a common mobile platform, or the image data 14 may be transferred from the imaging system to the processing system 12 over a communication network for processing of the image data 14 in a remote location. The image data 14 may be accompanied by projection information 16, or respective projection information 16 may be recorded for the imaging system at the processing system 12 or at another digital storage location.

The processing system 12 may determine the principal axis A associated with a projection model for obtaining the image data 14. For example, the processing system 12 may determine the principal axis A as a normal through a center of the field of view associated with the image data 14 for estimating the position and orientation of the optical axis of an associated camera. The processing system 12 may also select the principal axis A based on received information, e.g. provided with the image data 14 or the projection information 16. For example, the processing system 12 may determine the principal axis A based on the projection information 16, e.g. based on information on misalignment of lenses or an imaging sensor array with respect to the optical axis of the imaging system. As a specific example, the projection information 16 may comprise the intrinsic matrix $\mathbb{K}$ of the imaging system, and the processing system 12 may determine a location of the principal axis A based on the principal point P recorded in the intrinsic matrix K (e.g. based on coefficients $k_{13}$, $k_{23}$). However, the skilled person will appreciate that the intrinsic matrix K may also be calculated based on the projection information 16, e.g. based on camera system identifiers or projection properties, as discussed above.

When the principal axis A has been determined, the deflection metric may be calculated as a metric indicative of an opening angle associated with each point with respect to the principal axis A. For example, for each point at a given location in the pixel matrix, e.g. a given pixel position $\vec{u}$, the processing system 12 may calculate the deflection metric, e.g. $d(\vec{u})$ or $\alpha = \arctan(d(\vec{u}))$, for that point. The values of the deflection metric for each point maybe encoded in a pixel matrix as projection data 18.

The projection data 18 may then be provided with the image data 14 as an analysis data set 20, e.g. by encoding the deflection metric in a data channel of an image data file, or by providing the projection data 18 and the image data 14 as separate files to an analysis system (not shown).

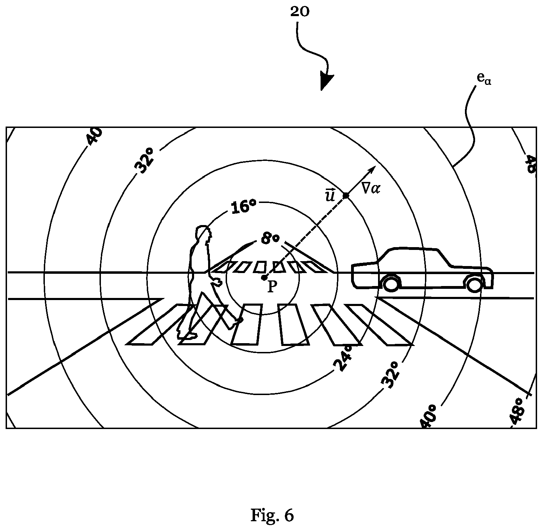

Fig. 6 illustrates a schematic example of an analysis data set 20, in which an image of a scene is overlaid with the corresponding deflection metric for each point, wherein the deflection metric is the zenith angle $\alpha$ and is graphically illustrated by equipotential lines $e_\alpha$ of the zenith angle $\alpha$. The zenith angle $\alpha$ is calculated with respect to the principal axis $A$, which is perpendicular to the plane of projection and goes through the principal point $P$. Further, an exemplary point $\vec{u}$ is illustrated in conjunction with an associated value of the local gradient $\nabla\alpha$ of the zenith angle $\alpha$.

As schematically illustrated in Fig. 6, the zenith angle $\alpha$ may be arranged in the pixel matrix of the image data 14 according to equipotential lines $e_\alpha$ forming concentric ellipses or circles, such that for each point in image data 14 a corresponding measure of its distance to the principal point $P$ can be provided. This distance is provided in a normalized form with respect to the angle between the projection ray $B$ and the principal axis $A$, thereby providing a measure of the opening angle at that point.

As can also be seen in Fig. 6, the additional data channel, in which the zenith angle $\alpha$ is encoded for each point in image data 14 (e.g. pixel), may be used to reconstruct the local gradient $\nabla\alpha$ of the zenith angle $\alpha$. The local gradient $\nabla\alpha$ can for example be calculated based on a convolutional Sobel operator as discussed in conjunction with Fig. 3. Hence, the zenith angle $\alpha$ provided in the pixel grid of the image data 14 also provides a measure of an azimuth angle $\beta$ for locating the origin of the respective pixel in the projected plane. By further providing a distance measure (e.g. "$D$" or "$R$", as shown in Fig. 1) for each pixel, the 3D point cloud associated with the pixel data can be reconstructed. The distance measure may be measured, e.g. with a LiDAR system or estimated, such as by providing the image data 14 to a depth estimation machine learning classifier.

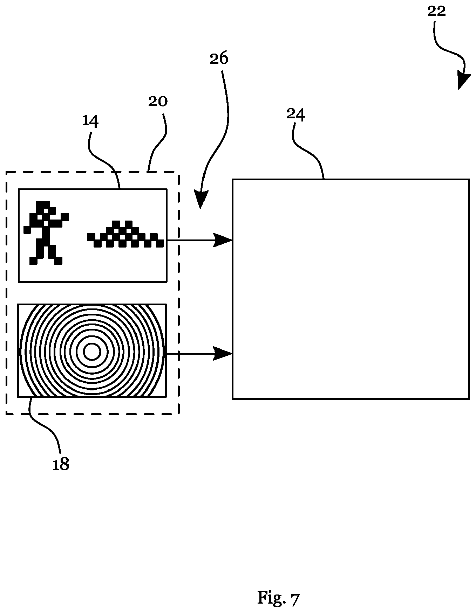

Fig. 7 illustrates an example of a classification system 22. The classification system 22 comprises a machine learning classifier 24 with an input interface 26 for receiving analysis data 20 composed of image data 14 and projection data 18 encoding a deflection metric in an array, which reflects the structure of the pixel matrix, in which the image data 14 is provided to the machine learning classifier 24.

Machine learning classifiers 24 classify inputs according to an internal classification model based on a previous training with training data. The model may be a support-vector machine or preferably an artificial neural network, which receives the analysis set 20 for classification purposes. For image classification purposes, the machine learning classifier 24 preferably comprises a convolutional neural network, which comprises a plurality of artificial neurons arranged in layers.

A convolutional neural network generally consists of an input layer, hidden layers and an output layer. In a convolutional neural network for applications in computer vision, the hidden layers usually include layers that perform convolutions. Typically, the convolutional layer includes a layer that performs a dot product of a convolution kernel with the layer's input matrix. The convolution may be followed by other layers such as pooling layers, fully connected layers, and normalization layers. The respective operations may be associated with weights, which may be learned by the artificial neural network in a training process.

Artificial neural networks generally learn (or are trained) by processing examples, each of which may contain a known "input" and "result" forming probability-weighted associations between the two. The training of a neural network from a given example may be conducted by determining the difference between the processed output of the network and a target output. The learning of the artificial neural network may be supervised, unsupervised, or reinforced depending on the application as well as the availability of training data. For example, the artificial neural network may be provided with training data for which a desired output (e.g. a correct result) is already available (supervised) or can at least be attributed a measure of accuracy (reinforcement).

In practice, the machine learning classifier 24 maybe provided with a plurality of images and the model may learn patterns by adjusting the weights of the internal operations depending on the quality of the output, e.g. based on a back-propagation algorithm.

The images may be provided to the machine learning classifier 24 as image data 14 in a pixel matrix. The projection data 18 may be provided to the machine learning classifier 24 at the input layer, or may be provided to hidden layers of an artificial neural network as an additional input. In some embodiments, the projection data 18 is provided to specific layers of artificial neurons or a second artificial neural network of the machine learning classifier 24, and outputs of said specific layers or said second artificial neural network are provided as inputs to hidden layers acting also on the image data 14, such as to provide the deflection metric to the convolutional neural network at an intermediate state of the classification task.

For example, a convolutional neural network acting on the image data 14 may be provided in an encoder-decoder architecture and appropriately sized maps of the projection data 18 may be provided as additional input, e.g. at skip connections between the encoder and decoder layers of equal size.

The machine learning classifier 24 may comprise a convolutional layer acting on the projection data 18, such that the machine learning classifier 24 may learn on its own to determine a measure indicative of the azimuth angle $\beta$ at an appropriate position of the model, if such a measure improves classification of training images. In other words, the machine learning classifier 24 may automatically learn an operator, such as the Sobel operators described above.

Accordingly, classification tasks, which are aimed at classifying objects in a three-dimensional scene, may be enhanced based on the provision of a single data channel including the deflection metric. Since, the deflection metric allows a convolutional neuronal network to reconstruct the azimuth angle $\beta$ based on internal convolution operations, the network may also provide outputs related to the position of an object in the image or in the corresponding scene. Moreover, the deflection metric may generalize the projection information over different imaging systems, such that the resulting network can be applied to the classification of images of different origin.

As the projection information is compressed into the deflection metric as a single data channel, the machine learning classifier 24 may feature lower computation time as well as faster convergence during training.

The skilled person will appreciate that the structure of the image data 14 and the projection 18 data maybe the same in embodiments, but that in principle the data 14, 18 may also be stored and provided in different file formats, e.g. with the individual values in different order, without changing the underlying structure. Hence, the condition that the structure of the image data 14 and the projection data 18 reflect each other should merely be considered as a requirement that corresponding values of the image data 14 and the projection data 18 can be clearly associated with each other.

It is noted that in computer vision, the same image may be provided to different layers of a convolutional neuronal network at different scales for classifying objects in said image. The skilled person will appreciate that the deflection metric may equally be rescaled or may be generated at the respective scales in an encoding stage. In some embodiments, the deflection metric may also be generated only for those pixels in image data 14, which are processed by a machine learning classifier 24, e.g. when portions of the image data 14 are discarded for the purpose of object classification.

The skilled person will further appreciate that the intrinsic matrix $\mathbb{K}$, has been discussed with respect to an example of a linear $3 \times 3$ tensor. However, the intrinsic matrix K may in principle be provided in the shape of a $3 \times 4$ tensor, e.g. as part of a camera matrix including a camera pose. The projection information may further comprise information on non-linear transformation, e.g. to reflect aberrations not covered by the pinhole camera model, which may be used in addition to the intrinsic matrix K for determining the deflection metric.

For example, the projection model can be extended for non-linearity based on distortion polynomials like Brown-Conrady or Scaramuzza. As a specific example, for the radial distortion modelling by Scaramuzza, a radial distortion can be modelled polynomial over the zenith angle $\alpha$, with $r_i$ as the coefficients:

$$\alpha_S = \alpha \cdot \left( 1 + \sum_{i=1} \alpha^{2i} r_i \right) \qquad (8)$$

In other words, the method is not limited to the simple pinhole camera projection model, but can be extended to more complex projection models with non-linear distortions using methods known in the art.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | encoding system |
| 12 | processing system |
| 14 | image data |
| 16 | projection information |
| 18 | projection data |
| 20 | analysis set |
| 22 | classification system |
| 24 | machine learning classifier |
| 26 | input interface |
| A | principal axis |
| B | projection ray |
| C | virtual camera position |
| P | principal point |
| D | projected distance |

| R | shortest distance |
|---|---|
| $\vec{X}_{3D}$ | point of a scene in 3D space |
| $d(\vec{u})$ | distance in homogeneous coordinates |
| $\vec{u}$ | projected point in image plane coordinate system |
| $I$ | image plane |
| $\alpha$ | zenith angle |
| $\beta$ | azimuth angle |
| $\nabla\alpha, \nabla\beta$ | local gradients |
| $e_\alpha, e_\beta$ | equipotential lines |
| $\vartheta$ | pitch angle |
| $\varphi$ | yaw angle |

**Claims**

1. A computer-implemented method for encoding projection properties associated with image data (14), said method comprising the steps of:

   a) determining a principal axis (A) of a projection model for obtaining the image data (14) from a scene;
   b) determining, for each point in the image data (14), a deflection metric ($\alpha$, $d(\overline{u})$) indicative of an angle ($\alpha$) between the principal axis (A) and a projection ray (B) through said point;
   c) encoding the deflection metric ($\alpha$, $d(\overline{u})$) for each point in the image data (14) as projection data (18).

2. The method of claim 1, wherein the angle ($\alpha$) and/or the deflection metric ($\alpha$, $d(\overline{u})$) is mathematically equivalent or proportional to the zenith angle ($\alpha$) of a spherical coordinate system, wherein the zenith is aligned with the principal axis (A) of the projection model.

3. The method of claim 1 or 2, wherein the projection model is based on a cylindrical or spherical projection and in particular based on a pinhole camera model; and/or wherein the principal axis (A) goes through a center of a field of view of an imaging apparatus for recording the scene.

4. The method of any one of the preceding claims, wherein equipotential lines ($e_\alpha$) of the deflection metric ($\alpha$, $d(\overline{u})$) encoded for each point in the image data (14) approximate elliptic arcs around the principal axis (A) in an image of the scene.

5. The method of any one of the preceding claims, wherein the method further comprises, determining a local gradient ($\nabla\alpha$) of the deflection metric ($\alpha$, $d(\overline{u})$) at a certain point in the image data (14) based on the values of the deflection metric ($\alpha$, $d(\overline{u})$) in neighboring points in the image data (14) for reconstructing a position of the certain point in the scene; and/or
   wherein the local gradient ($\nabla\alpha$) of the deflection metric ($\alpha$, $d(\overline{u})$) at a given point is substantially aligned along a line through the principal point associated with the projection model, wherein a structure of the projection data (18) reflects a structure of the image data (14), such that a local operation on the deflection metric ($\alpha$, $d(\overline{u})$) of neighboring points estimates the local gradient ($\nabla\alpha$), in particular using an image gradient operator on the deflection metrics ($\alpha$, $d(\overline{u})$) of the given point and its direct neighbors in image data (14), wherein the image gradient operator is preferably a discrete differentiation operator for computing an approximation of the gradient ($\nabla\alpha$) of the deflection metric ($\alpha$, $d(\overline{u})$) in the points of the image data (14), most preferably a Prewitt operator, a Sobel operator, a Scharr operator, or a Kayyali operator.

6. The method of any one of the preceding claims, wherein the method further comprises recording a distance (R, D) between the camera and the projected object for each point in the image data (14).

7. The method of any one of the preceding claims, wherein the method further comprises providing the image data (14) alongside the deflection metric ($\alpha$, $d(\overline{u})$) to a machine learning classifier (24) for classifying objects in an image of the scene based on the image data (14); and/or
   wherein the method comprises

   a) receiving image data (14) for the scene and projection information (16) of an imaging system for recording the image data (14), in particular comprising a focal length, a pixel magnification, a skew, a principal point shift, a sensor dimension, an angular resolution, or a parametrization of lens distortions, of the imaging system, or a combination thereof; and

b) determining the deflection metric ($\alpha$, $d(\overline{u})$) for each point in the image data (14) based on the projection information (16) of the imaging system.

8. The method of any one of the preceding claims, wherein the method comprises

a) receiving three-dimensional point data of the scene; and
b) calculating a projection of the three-dimensional point data on a two-dimensional image for obtaining two-dimensional image data (14) for the scene.

9. A non-transitory medium comprising machine-readable instruction, which, when executed by a processing system (12), implement a method according to any one of the preceding claims.

10. An image data (14) encoding system (10) comprising a processing system (12), wherein the processing system (12) is configured to

a) receive image data (14) of a scene;
b) determine a principal axis (A) of a projection model for projecting the scene onto a two-dimensional grid of pixels;
c) determine, for each pixel projected from the scene, a deflection metric ($\alpha$, $d(\overline{u})$) indicative of an angle ($\alpha$) between the principal axis (A) and a projection ray (B) through said pixel;
d) encode the deflection metric ($\alpha$, $d(\overline{u})$) for each pixel as projection data (18).

11. The system (10) of claim 10, wherein the angle ($\alpha$) and/or the deflection metric ($\alpha$, $d(\overline{u})$) is mathematically equivalent or proportional to the zenith angle ($\alpha$) of a spherical coordinate system, wherein the zenith is aligned with the principal axis (A) of the projection model; and/or
wherein the principal axis (A) goes through a center of a field of view of an imaging system for recording the scene.

12. The system (10) of claim 10 or 11, further comprising an imaging system for obtaining the image data (14) of the scene via a measurement, in particular comprising a camera and/or a distance measuring device, and the processing system (12) is configured to receive the image data (14) from the imaging system; and/or

wherein the processing system (12) is further configured to provide the image data (14) alongside the deflection metric ($\alpha$, $d(\overline{u})$) to a machine learning classifier (24) for classifying objects in an image of the scene based on the image data (14); and/or
wherein the processing system (12) is further configured to

a) receive image data (14) for the scene and projection information (16) of an imaging system for recording the image data (14), in particular comprising a focal length, a pixel magnification, a skew, a principal point shift, a sensor dimension, an angular resolution, or a parametrization of lens distortions, of the imaging system, or a combination thereof; and
b) determine the deflection metric ($\alpha$, $d(\overline{u})$) for each point in the image data (14) based on the projection information (16) of the imaging system.

13. The system (10) of any one of claims 10 to 12, wherein the processing system (12) is further configured to

a) receive three-dimensional point data of the scene; and
b) calculate a projection of the three-dimensional point data on a two-dimensional image for obtaining two-dimensional image data (14) for the scene.

14. A data structure, comprising:

a) image data (14), wherein the image data (14) comprises a plurality of image values arranged in a regular array, the regular array of image values forming a two-dimensional image, and
b) projection data (18), wherein the projection data (18) comprises a plurality of deflection metric ($\alpha$, $d(\vec{u})$) values arranged in a regular array reflecting the structure of the regular array of image values, and

wherein the deflection metric ($\alpha$, $d(\vec{u})$) values are each indicative of an angle ($\alpha$) between a principal axis (A) of a projection model for obtaining the image data (14) from a scene and a projection ray (B) corresponding to the image value in the image data (14) at the same position as the deflection metric ($\alpha$, $d(\vec{u})$).

15. An image classifying system (10) comprising a machine learning classifier (24),

- wherein the machine learning classifier (24) is trained with image data (14) based on a two-dimensional grid of pixels,
- wherein each pixel is associated with a deflection metric ($\alpha$, $d(\vec{u})$) indicative of an angle ($\alpha$) between a principal axis (A) of a projection model for projecting the scene onto the two-dimensional grid of pixels and a projection ray (B) through said pixel, and
- wherein the deflection metric ($\alpha$, $d(\vec{u})$) is provided to the machine learning classifier (24) alongside the image data (14) as an input.

$$\vec{X}_{3D} = \begin{bmatrix} X \\ Y \\ Z \end{bmatrix}$$

Fig. 1

Fig. 2A

Fig. 2B

Fig. 2C

Fig. 3

| determining a principal axis of a projection model for obtaining image data from a scene | S10 |

| determining, for each point in the image data, a deflection metric indicative of an angle between the principal axis and a projection ray through said point | S12 |

| encoding the deflection metric for each point in the image data as projection data | S14 |

Fig. 4

Fig. 5

Fig. 6

Fig. 7

## EUROPEAN SEARCH REPORT

Europäisches
Patentamt
European
Patent Office
Office européen
des brevets

**Application Number**

EP 21 21 7525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Fournier Richard A. ET AL: "Acquiring Hemispherical Photographs in Forest Environments: From Planning to Archiving Photographs" In: "Hemispherical Photography in Forest Science: Theory, Methods, Applications", 1 January 2017 (2017-01-01), Springer Netherlands, Dordrecht, XP055928572, ISSN: 1568-1319 ISBN: 978-94-024-1098-3 vol. 28, pages 85-114, DOI: 10.1007/978-94-024-1098-3_4, Retrieved from the Internet: URL:http://link.springer.com/content/pdf/10.1007/978-94-024-1098-3_4> | 1-6,8-14 | INV. G06T15/10 |
| Y | * section 4.2.2.1 * | 7 | |
| A | * figure 4.2 * | 15 | |
| | ----- | | |
| X | CARLO RUSSO ET AL: "Spherical coordinates transformation pre-processing in Deep Convolution Neural Networks for brain tumor segmentation in MRI", ARXIV.ORG, CORNELL UNIVERSITY LIBRARY, 201 OLIN LIBRARY CORNELL UNIVERSITY ITHACA, NY 14853, 17 August 2020 (2020-08-17), XP081742534, | 15 | |
| Y | * sections 3.1, 3.3- 3.6 * <br> * figures 1, 3, 4 * | 7 | |
| | ----- | | |
| | -/-- | | |

**TECHNICAL FIELDS SEARCHED (IPC)**

G06T

The present search report has been drawn up for all claims

| Place of search | Date of completion of the search | Examiner |
|---|---|---|
| Berlin | 8 June 2022 | Kröner, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 21 21 7525

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SALEHINEJAD HOJJAT ET AL: "Image Augmentation Using Radial Transform for Training Deep Neural Networks", 2018 IEEE INTERNATIONAL CONFERENCE ON ACOUSTICS, SPEECH AND SIGNAL PROCESSING (ICASSP), IEEE, 15 April 2018 (2018-04-15), pages 3016-3020, XP033401510, DOI: 10.1109/ICASSP.2018.8462241 [retrieved on 2018-09-10] * abstract * * sections 1, 2 * * figures 1a-d * | 1-15 | |
| A | Zhou Lin ET AL: "Object Detection for Remote Sensing Images Based on Polar Coordinates", IEEE access, 21 September 2020 (2020-09-21), pages 1-12, XP055928499, DOI: 10.1109/ACCESS.2017.DOI Retrieved from the Internet: URL:https://arxiv.org/pdf/2001.02988.pdf [retrieved on 2022-06-07] * sections I., III.B, III.C. * * figures 3, 4 * | 1-15 | TECHNICAL FIELDS SEARCHED (IPC) |

The present search report has been drawn up for all claims

| Place of search | Date of completion of the search | Examiner |
|---|---|---|
| Berlin | 8 June 2022 | Kröner, Sabine |